# EUROPÄISCHE PATENTANMELDUNG

(11) **EP 4 550 241 A1**
(43) Veröffentlichungstag der Anmeldung: **07.05.2025**
(21) Anmeldenummer: 24208243.6
(22) Anmeldetag: 23.10.2024
(51) Int. Cl.: G06Q 10/30

(54) **VERFAHREN ZUR AUSWAHL VON ENERGIESPEICHERN FÜR EIN RECYCLING IN EINER KREISLAUFWIRTSCHAFT AUF BASIS DIGITALER ZWILLINGE**

(30) Priorität: 02.11.2023 DE 102023210880
(71) Anmelder: Robert Bosch GmbH, 70442 Stuttgart (DE)
(72) Erfinder: Simonis, Christian, 71229 Leonberg (DE)

(57) **Zusammenfassung**

Die Erfindung betrifft ein Verfahren zur Auswahl von Energiespeichern für einen Recyclingprozess, mit folgenden Schritten:
- Bereitstellen (S1) von Betriebsgrößenverläufen einer Vielzahl von Energiespeichern in ihren jeweiligen Anwendungen;
- Auswerten (S2) der Betriebsgrößenverläufe jedes Energiespeichers mithilfe eines Energiespeichermodells, um als Energiespeicherdaten jeweils einen aktuellen Alterungszustand und einen oder mehrere interne Systemzustände zu erhalten;
- Bereitstellen (S3) von Energiespeicherinformationen für jeden der Energiespeicher, wobei die Energiespeicherinformationen zumindest einen Energiespeichertyp des jeweiligen Energiespeichers angeben;
- Bereitstellen (S4) mindestens einer Recycling-Anfrage für mindestens einen Recyclingprozess, wobei die Recycling-Anfrage zumindest eine Materialart und eine entsprechende Materialmenge angibt;
- Auswählen (S5, S6) von Energiespeichern abhängig von der mindestens einen Recycling-Anfrage und dem Energiespeichertyp und abhängig von einem Eignungswert, der eine Eignung des jeweiligen Energiespeichers für ein sofortiges Recycling angibt, so dass nur zu der mindestens einen Recycling-Anfrage passende Energiespeicher mit den schlechtesten Eignungen für die jeweiligen Anwendungen ausgewählt werden;
- Zuführen (S7) des ausgewählten Energiespeichers zu dem mindestens einen Recyclingprozess.

## Beschreibung

### Technisches Gebiet

Die Erfindung betrifft Verfahren zur bedarfsgerechten Auswahl von gealterten Energiespeichern für einen Recycling-Prozess.

### Technischer Hintergrund

Energiespeicher, wie z. B. Gerätebatterien, insbesondere Fahrzeugbatterien, können als Systeme vorgesehen sein, die größere Mengen von wertvollen Rohstoffen enthalten.

Nach dem Lebensdauerende sind die in dem Energiespeicher verbauten Materialien in der Regel nicht verbraucht. So können Energiespeicher in der Regel vollständig recycelt werden, um Rohmetalle, wie Lithium, Zink und dergleichen zurückzugewinnen. Diese können aufbereitet und für die Herstellung neuer Energiespeicher verwendet werden.

Darüber hinaus werden Energiespeicher auch über ihre geplante Lebensdauer hinaus in technischen Geräten in ihrer Erstanwendung oder in einer Weiterverwendung eingesetzt. Eine Weiterverwendung kann in einem stationären System vorgesehen sein, so dass ein regelmäßiger Austausch nicht immer möglich ist.

In der Regel degradiert die Leistungsfähigkeit eines Energiespeichers über die Zeit und abhängig von ihrer Nutzung, so dass ungeachtet ihres kalendarischen

Alters unterschiedliche Alterungszustände und interne Systemzustände aufgrund der zyklischen Alterung erreicht werden können. Auch können die internen Systemzustände ausgewertet werden, um mögliche Anomalien des betreffenden Energiespeichers festzustellen. Diese Anomalien können ein sofortiges Nutzungsende bedingen oder lediglich auf eine verstärkte künftige Alterung bzw. Degradation und einen anstehenden frühzeitigen Ausfall hinweisen.

In der Regel können Energiespeicher in einer Anwendung über ihr für die betreffende Anwendung geplantes Lebensdauerende hinaus betrieben werden, wenn eine geringere Leistungsfähigkeit in Kauf genommen werden kann. Das Lebensdauerende wird in der Regel durch einen Abfall der Leistungsfähigkeit, insbesondere der Speicherfähigkeit, unter einen vorbestimmten Schwellenwert definiert. So können Fahrzeugbatterien, deren Lebensdauerende mit 80 % des kapazitätsbezogenen Alterungszustands SOH-C definiert ist, auch bei Alterungszuständen unter diesem Wert betrieben werden. Gegebenenfalls kann die Fahrzeugbatterie z. B. in einem stationären Betrieb der Batterie vorgesehen werden.

Das Zuführen von Alt-Energiespeicher in einen Recyclingkreislauf erfolgt in der Regel anfragebasiert durch einen Recycler oder in Form eines Termingeschäfts z. B. über einen Smart Contract oder dergleichen. Ziel ist es, diejenigen Gerätebatterien aus der laufenden Verwendung auszusondern, die für eine Weiterverwendung besonders ungeeignet sind.

### Offenbarung der Erfindung

Erfindungsgemäß sind ein Verfahren zur Auswahl von Energiespeichern für einen Recycling-Prozess gemäß Anspruch 1 sowie eine entsprechende Vorrichtung gemäß dem nebengeordneten Anspruch vorgesehen.

Weitere Ausgestaltungen sind in den abhängigen Ansprüchen angegeben.

Gemäß einem ersten Aspekt ist ein Verfahren zur Auswahl von Energiespeicher für einen Recycling-Prozess vorgesehen, mit folgenden Schritten:
- Bereitstellen von Betriebsgrößenverläufen einer Vielzahl von Energiespeicher in ihren jeweiligen aktuellen und/oder geplanten Anwendungen;
- Auswerten der Betriebsgrößenverläufe jedes Energiespeichers, um als Energiespeicherdaten jeweils einen aktuellen Alterungszustand und einen oder mehrere interne Systemzustände zu erhalten;
- Bereitstellen von Energiespeicherinformationen für jeden der Energiespeicher, wobei die Energiespeicherinformationen zumindest einen Energiespeichertyp des jeweiligen Energiespeichers angibt;
- Bereitstellen einer Recycling-Anfrage für einen Recycling-Prozess, wobei die Recycling-Anfrage zumindest eine Materialart und eine entsprechende Materialmenge angibt;
- Auswählen von Energiespeichern abhängig von der Recycling-Anfrage und dem jeweiligen Energiespeichertyp und abhängig von einem Eignungswert, der eine Eignung des jeweiligen Energiespeichers für ein sofortiges Recycling angibt, so dass nur zur Recycling-Anfrage passende Energiespeicher mit den schlechtesten Eignungen für die jeweiligen Anwendungen ausgewählt werden;
- Zuführen der ausgewählten Energiespeicher zu dem Recycling-Prozess

Es kann vorgesehen sein, dass das Auswählen der Energiespeicher basierend auf einer Abfrage eines Systems, das einen Wissensgraphen enthält, mit der Recycling-Anfrage und dem jeweiligen Energiespeichertyp der betreffenden Energiespeicher erfolgt.

Weiterhin kann der Eignungswert eines jeweiligen Energiespeichers abhängig von einer Eignungsfunktion bestimmt werden, wobei die Eignungsfunktion eine oder mehrere der folgenden berücksichtigt:
- eine Menge an freigesetztem CO₂, die durch das Zuführen des bestimmten Energiespeichers zu dem Recycling-Prozess entsteht, insbesondere durch den Transport von dem Standort des Energiespeichers zu einem Recyclingort des Recycling-Prozesses,
- den aktuellen Alterungszustand,
- eine Restlebensdauer, die mit einer prädizierten Alterungszustandstrajektorie bestimmt wird,
- ein Vorliegen einer Anomalie,
- ein Über- oder Unterschreiten eines jeweils vorgegebenen Schwellenwerts durch einen oder mehrere interne Systemzustände.

Das obige Verfahren basiert darauf, dass für jeden der betrachteten Energiespeicher historische Betriebsgrößendaten zur Verfügung stehen. Die Betriebsgrößen des Energiespeichers umfassen im Falle einer Gerätebatterie zumindest einen Batteriestrom und eine Batterietemperatur sowie des Weiteren eine Batteriespannung und ein Ladezustand auf Pack, Modul und auf Zellenebene. Aus den historischen Betriebsgrößenverläufen kann eine entsprechende Nutzungsart des Energiespeichers bestimmt werden. Dies ermöglicht es, einen Alterungszustand zu modellieren.

Weiterhin kann im Falle einer Gerätebatterie ein elektrochemisches (P2D-) Batteriemodell als Energiespeichermodell parametrisiert werden, mit denen interne Batteriezustände (Systemzustände) rechnerisch ermittelt werden können. Das P2D (pseudo-zweidimensionale) Batteriemodell ist ein mathematisches Modell zur Beschreibung der elektrochemischen Prozesse in einer Batterie. Das P2D-Batteriemodell ist in der Lage, die Leistung und das Verhalten von Batterien unter verschiedenen Betriebsbedingungen vorherzusagen und insbesondere eine Klemmenspannung der Gerätebatterie zu modellieren.

Das P2D-Modell berücksichtigt verschiedene physikalische und chemische Prozesse in einer Batterie, wie den Lithiumionentransport (Transport von Lithiumionen zwischen dem Anoden- und Kathodenmaterial und innerhalb dieser Materialien), den Elektronentransport (Transport von Elektronen durch die Anode, den Elektrolyten und die Kathode), die elektrochemischen Reaktionen (Reaktionen, die beim Laden und Entladen der Batterie auftreten) und die Wärmeentwicklung und -ableitung während der Batteriebetriebszeit. Das P2D-Modell verwendet partielle Differenzialgleichungen, um diese Prozesse zu beschreiben und vorherzusagen, wie sich die Batterie unter verschiedenen Betriebsbedingungen verhält. Beispielsweise können mithilfe des P2D-Batteriemodells interne Batteriezustände der Gerätebatterie bestimmt werden, aus denen ein Alterungszustand der Gerätebatterie abgeleitet werden kann. Die Parametrierung der Modellparameter eines P2D-Batteriemodells erfolgt basierend auf Zeitreihen von Betriebsgrößen der Gerätebatterie mithilfe numerischer Optimierungsverfahren.

Somit kann z. B. in Form eines digitalen Zwillings jedes der betrachteten Energiespeicher als Modell bereitgestellt werden. Hierbei kann jede physische Einheit einer Fahrzeug- bzw. Energiespeicher-Flotte als eine eigene Instanz eines digitalen Zwillings angesehen und modelliert werden, um Serienstreuungs-Effekte und Energiespeicher -individuelle Charakteristika von mehreren Energiespeichern im Rahmen einer Flotte beschreiben zu können.

Darüber hinaus können die internen Systemzustände, die sich aus dem für einen bestimmten Energiespeicher parametrierten Energiespeichermodell ergeben, insbesondere Energiespeicher-individuell in einem digitalen Energiespeicher-Instanz-Zwilling, ausgewertet werden, um beispielsweise eine mögliche Anomalie in dem betreffenden Energiespeicher zu erkennen.

Als Energiespeicherdaten kann nun ein aktueller Alterungszustand, eine prädizierte Alterungszustandstrajektorie, interne Systemzustände und eine etwaige Anomalie bereitgestellt werden.

Darüber hinaus umfassen die Energiespeicherdaten jedes Energiespeichers Angaben zu dem Energiespeichertyp, der Nominalkapazität, einer verbleibenden Mindesteinsatzzeit und dergleichen.

Es kann vorgesehen sein, dass das Auswählen der Energiespeicher basierend auf einer Energiespeicherinformation über eine verbleibende Mindest-Einsatzzeit in der jeweiligen Anwendung erfolgt.

Initiiert durch eine Recycling-Anfrage, die beispielsweise von einem Recycling-Unternehmen oder über einen Terminkontrakt gestellt werden kann, kann nun basierend auf den Energiespeicherdaten und den Spezifikationen der Recycling-Anfrage ein Eignungswert bestimmt werden. Die Recycling-Anfrage kann beispielsweise eine oder mehrere der folgenden Angaben umfassen: ein oder mehrere benötigte Materialien; eine Materialmenge, einen Recyclingort, und dergleichen.

Dies kann beispielsweise mithilfe eines Wissensgraphen durchgeführt werden.

Ein Wissensgraph ist ein Netzwerk aus Entitäten (Dingen, Konzepten, Personen, Orten usw.) und den Beziehungen zwischen ihnen. Diese Entitäten und Verbindungen sind oft aus verschiedenen Quellen abgeleitet. Eine Die Traceability-Verknüpfung bezieht sich auf die Fähigkeit, die Herkunft einer bestimmten Entität oder Beziehung in einem Wissensgraphen nachzuverfolgen. Es geht darum, die Quelle oder den Ursprung der Information zu kennen und zu dokumentieren. Die Traceability-Verknüpfung in einem Wissensgraphen kann durch zusätzliche Metadaten realisiert werden, die mit jeder Entität oder Beziehung verknüpft sind und Informationen über ihre Herkunft enthalten.

Basierend auf den Spezifikationen der Recycling-Anfrage und den Energiespeicherdaten kann eine Suche in dem Wissensgraphen durchgeführt werden, in dem über semantische Modellierung beschrieben ist, z. B. welche aktiven Materialien die Gerätebatterie eines bestimmten Energiespeichertyps aufweisen und welche Mengen diese enthalten. Die Suchkriterien, über welche der Wissensgraph befragt wird, können dabei umfassen, ob die in der Recycling-Anfrage definierten Materialien vorhanden sind, inwieweit die Energiespeicher verfügbar sind hinsichtlich ihrer verbleibenden Mindesteinsatzzeit, ihres Standorts und Erreichbarkeit sowie ihres aktuellen Werts für die aktuelle Anwendung. Dies kann beispielsweise basierend auf dem aktuellen Alterungszustand, der prädizierten Alterungszustandstrajektorie, den internen Systemzuständen, dem Vorhandensein einer Anomalie und den sonstigen Energiespeicherdaten bestimmt werden. Der Eignungswert ergibt sich daraus, inwieweit die Energiespeicher für einen Verbleib in dem Einsatz in der dem jeweiligen Energiespeicher zugeordneten Anwendung geeignet ist.

Der Eignungswert kann sich aus einer Eignungsfunktion ergeben, welche die Energiespeicherdaten auswertet und insbesondere den CO₂-Fußabdruck berücksichtigt oder berechnet, um den betreffenden Energiespeicher dem Recycling-Prozess zuzuführen. Der Eignungswert kann z. B. basierend auf einer Entfernung und Transportmöglichkeit, zu dem Recyclingort, dem aktuellen Alterungszustand und der verbleibenden Restlebensdauer in der betreffenden Anwendung, dem Vorliegen einer Anomalie und dergleichen bestimmt werden.

Basierend auf den Eignungswerten können nun die Energiespeicher sortiert und priorisiert werden, um die angefragte Menge an Recyclingmaterial durch das Zuführen zu dem Recycling-Prozess bereitzustellen.

Weiterhin kann der Eignungswert mithilfe einer semantischen Traceability-Verknüpfung bestimmt werden, insbesondere abhängig von einer Menge an freigesetztem CO₂.

Zudem kann eine automatisierte Speicherung in einer Datenbank mit semantischer Verlinkung im Wissensgraph erfolgen, sodass auf Basis von Nutzmustern oder Instandhaltungen oder Material-Austausch eine aktuelle effektive Menge an freigesetztem CO₂ berechnet und bereitgestellt wird.

Das Ziel ist es, diejenigen Energiespeicher anhand eines Rankings der Eignungswerte zu bestimmen, die für die jeweils aktuelle Anwendung, in der sie eingesetzt sind, am ungeeignetsten sind. Diese werden zum Entnehmen aus den Anwendungen ausgewählt, so dass diese durch neuere Energiespeicher ersetzt werden können.

Sind die entsprechenden Energiespeicher zum Zuführen zu dem Recycling-Prozess identifiziert, kann gegebenenfalls die Recycling-Anfrage in automatisierter Weise beantwortet werden, insbesondere unter Angabe eines Preismodells, das sich auf die Eignungswerte bezieht.

Das obige Verfahren ermöglicht es, in automatisierter Weise in verschiedenen Anwendungen eingesetzte Energiespeicher hinsichtlich ihrer Eignung für das Zuführen zu einem Recycling-Prozess zu bewerten und auszuwählen. Dadurch kann bedarfsgerecht ein Recycling-Prozess entsprechend einer Recycling-Anfrage unterstützt werden.

Gemäß einem weiteren Aspekt ist eine Vorrichtung zur Durchführung des obigen Verfahrens vorgesehen.

### Kurzbeschreibung der Zeichnungen

Ausführungsformen werden nachfolgend anhand der beigefügten Zeichnungen näher erläutert. Es zeigen:
- Figur 1: ein System mit einer Vielzahl von Gerätebatterien in entsprechenden Anwendungen, die mithilfe einer gerätefernen Zentraleinheit überwacht werden; und
- Figur 2: ein Flussdiagramm zur Veranschaulichung eines Verfahrens zur Auswahl von Gerätebatterien zum Zuführen zu einem Recyclingprozess; und
- Figur 3: eine exemplarische Visualisierung eines Wissensgraphen.

### Beschreibung von Ausführungsformen

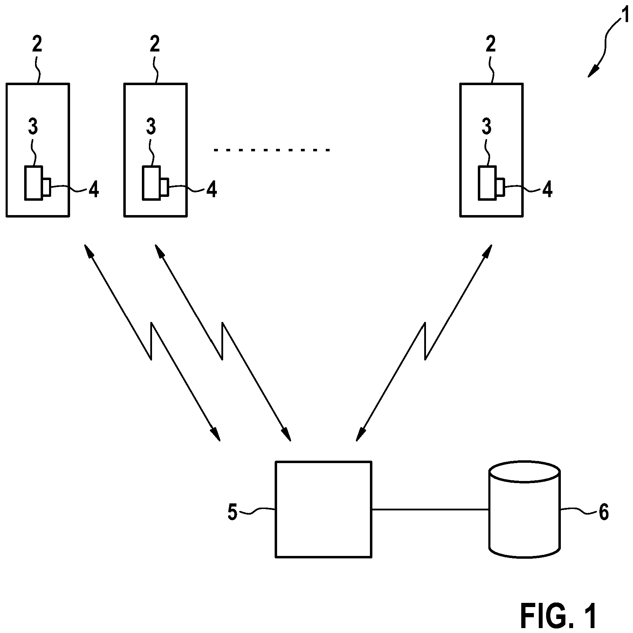

Figur 1 zeigt schematisch ein System 1 mit einer Vielzahl von Gerätebatterien 3 als mögliche Energiespeicher, die in jeweiligen Anwendungen 2 eingesetzt werden. Die Anwendungen können mobile Anwendungen, wie beispielsweise eine Fahrzeugbatterie in einem Fahrzeug, als auch stationäre Anwendungen, wie beispielsweise eine Hausbatterie, Solarbatterie oder dergleichen, umfassen. Die Energiespeicher können auch andere elektrochemische Energiespeicher, wie z. B.z. B. ein Brennstoffzellensystem, umfassen.

Mithilfe eines jeweiligen Batteriemanagementsystems 4, das den Gerätebatterien zugeordnet ist, können Betriebsgrößen der Gerätebatterien, insbesondere ein Batteriestrom, eine Batteriespannung (Pack, Modul und Batteriezellen), ein Ladezustand und eine Batterietemperatur, als Zeitreihen erfasst werden und diese an eine Zentraleinheit 5 übermittelt werden.

In der Zentraleinheit 5 können basierend auf den zeitlichen Betriebsgrößenverläufen Energiespeicherdaten ermittelt werden, die den aktuellen Zustand der Batterie bestmöglich abbilden. Als Energiespeicherdaten können ein aktueller Alterungszustand basierend auf den zeitlichen Betriebsgrößenverläufen, interne Batteriezustände basierend auf einer Parametrierung eines elektrochemischen Batteriemodells, wie einem P2D-Batteriemodell, eine prädizierte Alterungszustandstrajektorie und eine aus den vorstehenden Energiespeicherdaten erkannte Anomalie angegeben werden.

In der Zentraleinheit 5 ist für jede Gerätebatterie 3 vorgesehen, die Zellen-Alterungszustände der einzelnen Batteriezellen durch Vorhalten eines zugeordneten elektrochemischen Batteriemodells und/oder eines Alterungszustandsmodells zu überwachen. Diese Modelle werden jeweils aktualisiert bzw. ausgewertet, sobald für die betreffende Batteriezelle/Gerätebatterie Betriebsgrößenverläufe so zur Verfügung stehen, dass eine Aktualisierung des der betreffenden Batteriezelle zugeordneten inneren Batteriezustands und/oder Alterungszustands möglich ist. Man erhält somit eine Abbildung der Gerätebatterie als "digitalen Zwilling" in der Zentraleinheit, wobei für jede Batteriezelle der überwachten Gerätebatterien ein innerer Batteriezustand und ein Alterungszustand angegeben sein kann.

Das Auswerten des Batteriezustands mithilfe der zeitlichen Betriebsgrößenverläufe z. B. mithilfe des elektrochemischen Batteriemodells und/oder des elektrochemischen Alterungsmodells erfordert jedoch ein Bereitstellen der Betriebsgrößenverläufe in einer hohen zeitlichen Auflösung, d. h. mit einer hohen Abtastfrequenz, von z. B. zwischen 1Hz bis 100 Hz. Die Übermittlung von Betriebsgrößenverläufen für die Batteriezellen und/oder die Gerätebatterie 3 in einer hohen zeitlichen Auflösung führt zu hohen Datenmengen, die von der Vielzahl von Anwendungen an die Zentraleinheit 5 übermittelt werden müssen.

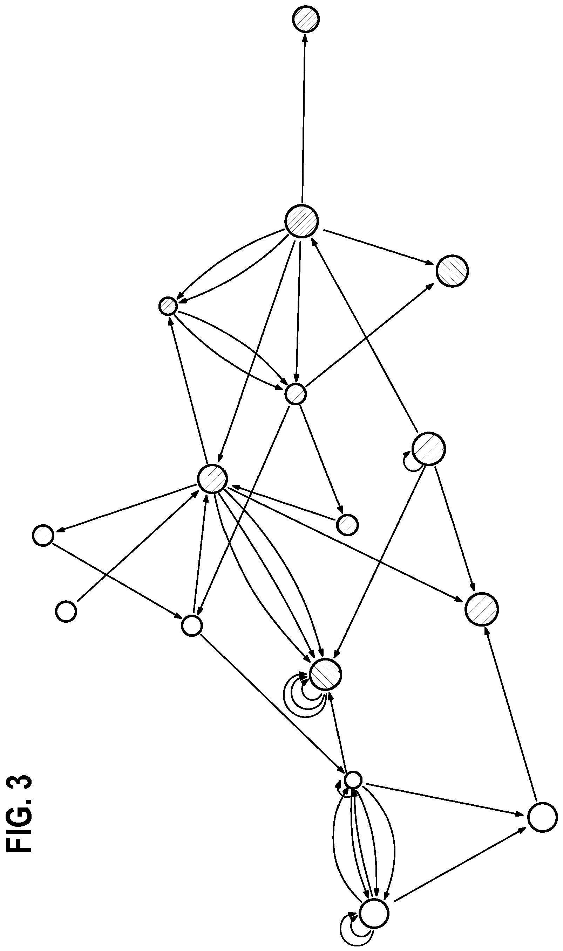

In einer Datenbank 6 der Zentraleinheit 5 kann ein Wissensgraph implementiert sein, der über semantische Modellierung beschrieben ist. Der Wissensgraph enthält z. B. Angaben darüber, mit welchen Materialien die Batterietypen der Anwendungen aufgebaut sind und welche Anteile bzw. Mengen jeweils darin enthalten sind. In Figur 3 ist ein solcher Wissensgraph dargestellt. Die Knoten umfassen dabei Entitäten und die Kanten zwischen den Knoten geben eine Beziehung zwischen den Entitäten an.

Der Wissensgraph kann unter anderem Informationen enthalten zu:
- Digitalen Produkt-Zwillingen, wie:
   ∘ Master-Daten und Typ-Daten;
   ∘ Qualitäts-Informationen;
   ∘ Service-Daten;
   ∘ Logistik-Daten;
   ∘ Anforderungs-Informationen u. Spezifikation für:
      ▪ Interne Prozesse, wie Fertigung im eigenen Unternehmen;
      ▪ Externe Prozesse, wie Fertigung bei Zulieferern oder Kunden;
   ∘ Design-, Auslegungs- und Engineering-Informationen
      ▪ Änderungen sämtlicher Spezifikationen über Zeit, wie z. B. Engineering Change-Requests und Änderungsscheine;
      ∘ Generelle Wirkketten Modellierung, wie:
         ▪ Verhaltensmodelle, zum Beispiel zur Berechnung einer Spannungs-Antwort;
         ▪ Alterungsmodelle, zum Beispiel zur Berechnung u. Prädiktion mindestens eines Batterie-Zustands, wie SEI-Dicke oder verfügbares Lithium oder Alterungszustand;
      ∘ Validierungs-Daten;
      ∘ Freigabe-Daten;
      ∘ Meta-Informationen zum Kontext;
      ∘ Informationen zum digitalen Produkt-Pass, siehe auch diese Quelle hier:
- Digitalen Instanz-Zwillingen, wie Instanzen zu sämtlichen o.g. Produkt-Informationen. Insbesondere sind das:
   ∘ Daten zum eindeutigen Identifizieren des physikalischen Zwillings;
   ∘ Fertigungs-Daten einer Digitalen Zwillings-Instanz. Wie z. B. mindestens;
      ▪ Eine End of Line Messung;
      ▪ Ein Prozess Parameter;
   ∘ Qualitäts-Instanz-Daten, wie
      ▪ Werkstatt-Daten u. Historie;
      ▪ Claim-Daten u. Historie;
      ▪ Zeitreihen-Daten, speziell Sensorik-Daten, die im Fahrzeug erfasst wurden und an die Cloud gesendet wurden;
      ▪ Diagnose-Daten u. Historie wie Diagnostic Trouble Codes;
   ∘ Betriebs-Daten, wie z. B.:
      ▪ mindestens ein individuell erlernter Parameter in einem Beobachter-Modell;
      ▪ mindestens ein Parameter einer Betriebs-Strategie
      ▪ Bedatung mindestens eines Models, z. B. zum Berechnen eines CO₂-Fußabdrucks;
   ∘ Meta-Informationen zum Kontext
      ▪ Z. B. Serienstreuung der Instanz in welches das Produkt integriert wurde, also z. B. der Hydrogen Gas Injector (HGI) wird in das Fuel Cell Power Model (FCPM) integriert, das auch eine Serienstreuung aufweisen kann.

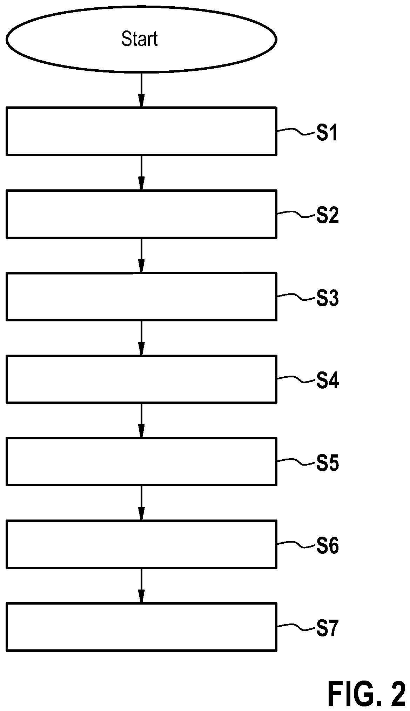

Figur 2 zeigt anhand eines Flussdiagramms einen Ablauf eines Verfahrens zur Auswahl und Zuführung von Gerätebatterien zu einem Recycling-Prozess. Das Verfahren kann in Form einer Software und/oder Hardware in einer Recheneinheit der Zentraleinheit 5 ausgeführt werden.

In Schritt S1 werden zunächst Betriebsgrößendaten aller Gerätebatterien aller Anwendungen 2 kontinuierlich an die Zentraleinheit 5 übermittelt. Die Zentraleinheit 5 speichert die Betriebsgrößendaten als Betriebsgrößenverläufe für jede der Gerätebatterien 3 separat ab.

In Schritt S2 werden ein oder mehrere Batteriemodelle für die individuellen Gerätebatterien trainiert bzw. parametriert. So kann beispielsweise ein Alterungszustandsmodell verwendet werden, das mit Betriebsgrößendaten einer Vielzahl von Gerätebatterien gleichen Batterietyps erstellt wird. Durch Auswertung des auf Differenzialgleichungen basierenden Alterungsmodells bzw. auf einem hybriden Alterungsmodell kann ein aktueller Alterungszustand der betreffenden Gerätebatterie bestimmt werden.

Alternativ kann für jede der Gerätebatterien ein elektrochemisches Batteriemodell modelliert werden. Das Batteriemodell kann einem P2D-Batteriemodell entsprechen, wobei das Batteriemodell mithilfe eines Fitting-Verfahrens basierend auf einer Kleinste-Quadrate-Methode oder einem Maximum-Likelihood-Ansatz eine Anpassung der Modellparameter vornimmt, um anhand der Modellparameter interne Batteriezustände zu bestimmen.

Das elektrochemische Batteriemodell umfasst ein Differenzialgleichungssystem, das basierend auf über Modellparameter parametrisierte Differenzialgleichungen innere Batteriezustände, insbesondere Gleichgewichtszustände und ggfs. kinetische Zustände, mithilfe eines Zeitintegrationsverfahren modelliert und eine Beziehung zwischen Betriebsgrößen der Batteriezellen der Gerätebatterie, nämlich einem Batteriestrom, einer Batteriespannung, einer Batterietemperatur und einem Ladezustand der Gerätebatterie bereitstellt. Derartige elektrochemische Batteriemodelle sind beispielsweise aus den Druckschriften US 2016/023,566, US 2016/023,567 und US 2020/150,185 bekannt.

Somit erhält man für jede der individuellen Gerätebatterien interne Batteriezustände und einen Alterungszustand, die als Batteriedaten bzw. Energiespeicherdaten bereitgestellt werden.

Zudem steht für jede der Gerätebatterien eine Batterieinformation als Batteriedaten zur Verfügung, die den Batterietyp, die Nominalkapazität, die verbleibende Mindesteinsatzzeit in der betreffenden Anwendung, ihr kalendarisches Alter und dergleichen angibt.

In Schritt S3 können den Batteriedaten weiterhin Auswertungen aus den internen Batteriezuständen und den Betriebsgrößenverläufen hinzugefügt werden.

Beispielsweise kann basierend auf Stressfaktoren der jeweiligen Gerätebatterie eine Prädiktion des Alterungszustands vorgenommen werden, um eine Angabe zur künftigen Degradation der Gerätebatterie zu erhalten. Eine solche Auswertung kann regelmäßig, z. B. einmal pro Woche, erfolgen und liefert eine Alterungszustandstrajektorie für prädizierte Alterungszustände. Die Prädiktion des Alterungszustands erfolgt mithilfe eines Lastprofils, das der jeweiligen Anwendung zugeordnet ist. Ist die Anwendung eine Anwendung als Fahrzeugbatterie im Fahrzeug, so kann als Lastprofil eine fahrerindividuelle Angabe bereitgestellt werden, die aus einem historischen Fahrverhalten abgeleitet werden kann.

Weiterhin kann basierend auf den internen Batteriezuständen eine Anomalieerkennung ausgeführt werden, um festzustellen, ob das Verhalten der jeweiligen Gerätebatterie dem Normverhalten entspricht oder ob das Verhalten davon abweicht und mit einem baldigen Ausfall der entsprechenden Gerätebatterie zu rechnen ist.

Insgesamt werden die Batteriezustände, der aktuelle Alterungszustand sowie die prädizierte Alterungszustandstrajektorie, die Batterieinformationen und/oder Angaben über mögliche Anomalien als Batteriedaten bereitgestellt.

Die Batteriedaten können in der Zentraleinheit 5 in der Form eines digitalen Zwillings gespeichert sein. Die Batteriedaten des digitalen Zwillings können gegebenenfalls mit einem signierten Nutzungszertifikat zum Abruf bereitgestellt werden.

Der digitale Zwilling in der Gerätebatterie kann mit einem Wissensgraphen verbunden sein, der auf semantischen Technologien basiert. Der Wissensgraph modelliert in einem Datenmodell Ontologien, wie beispielsweise die Materialeigenschaften sämtlicher zu überwachender Gerätebatterien und der Batteriearten.

Im Folgenden wird in Schritt S4 überprüft, ob eine Recycling-Anfrage vorliegt. Die Recycling-Anfrage kann basierend auf einer konkreten Anfrage eines Recyclingunternehmens oder basierend auf einer Anfrage zu einem Termingeschäft (Smart Contract) vorliegen. Die Recycling-Anfrage kann beispielsweise eine oder mehrere Materialarten, eine jeweilige Materialmenge eines der Materialarten, wie z. B. eine , einen Zeitpunkt der Verfügbarkeit des Recyclingmaterials und dergleichen als Anfrageparameter angeben. Es kann nun eine automatisierte Suche im Wissensgraphen durchgeführt werden, basierend auf den Anfrageparametern der Recycling-Anfrage.

Im Wissensgraphen ist z. B. über semantische Modellierung beschrieben, aus welchem Kathodenmaterial die Batterien der verschiedenen Batteriearten in den Anwendungen aufweisen und welche Mengen jeweils vorhanden sind. Die Suchkriterien, über welche der Wissensgraph befragt wird, können hierbei die bestimmten Materialien der Recycling-Anfrage sowie eine Angabe zur Recyclebarkeit des betreffenden Batterietyps umfassen. Die jeweiligen Gerätebatterien, die basierend auf der Suche in dem Wissensgraph als mögliche Kandidaten für ein Recycling in Frage kommen, werden nun als Auswahlmenge von Gerätebatterien bereitgestellt. Weiterhin können nur diejenigen Gerätebatterien der Auswahlmenge zugeordnet werden, deren Verfügbarkeit hinsichtlich ihrer verbleibenden Mindesteinsatzzeit in der jeweiligen Anwendung gegeben ist.

In einem nachfolgenden Schritt S5 wird nun anhand der Auswahlmenge mithilfe eines Eignungswerts ein Ranking der Gerätebatterien in der Auswahlmenge erstellt.

Der Eignungswert für eine bestimmte Gerätebatterie kann beispielsweise mithilfe einer vorgegebenen Eignungsfunktion berücksichtigen, welche CO₂-Produktion durch das Zuführen der bestimmten Gerätebatterie zu dem Recyclingprozess entsteht (z. B. durch Transport von dem Standort der Gerätebatterie zu dem Recyclingort und Transportmöglichkeiten), wie der aktuelle Alterungszustand ist und welche Restlebensdauer noch vorhanden ist, die mit der prädizierten Alterungszustandstrajektorie bestimmt werden kann, ob eine Anomalie vorliegt, ob ein oder mehrere interne Batteriezustände einen jeweils vorgegebenen Schwellenwert über- oder unterschreiten und dergleichen.

Es kann vorgesehen sein, dass automatisiert eine Schätzung des aktuellen CO₂-Fußabdruckes stattfindet, wobei eine automatisierte Speicherung in einer Datenbank mit semantischer Verlinkung im Wissensgraph stattfindet, sodass auf Basis von Nutzmuster oder Instandhaltungen oder Material-Austausch ein aktueller effektiver CO₂-Fußabdruck berechnet und in Echtzeit oder regelmäßig, z. B. einmal pro Woche, bereitgestellt wird.

Der resultierende Eignungswert kann die generelle Eignung einer Gerätebatterie in der betreffenden Anwendung angeben.

Für den Recyclingprozess sollen in Schritt S6 die jeweils schwächsten Gerätebatterien ausgewählt werden, d. h. diejenigen Gerätebatterien, die für die jeweilige Anwendung am wenigstens geeignet sind. Es werden dabei so viele Gerätebatterien aus der Auswahlmenge ausgewählt, wie durch die Mengenangabe in der Recycling-Anfrage bestimmt ist, so dass durch die Auswahl die angeforderte Menge an Recyclingmaterial bereitgestellt werden kann.

Diese Gerätebatterien können in Schritt S7 nun dem Recyclingprozess zugeführt werden.

Gegebenenfalls kann die Recycling-Anfrage, sofern diese auf einem Terminkontrakt basiert, automatisiert beantwortet werden, indem dem Eignungswert ein Angebotspreis zugeordnet wird, der als Antwort auf den Terminkontrakt angeboten wird.

## Patentansprüche

1. Verfahren zur Auswahl von Energiespeichern für einen Recyclingprozess, mit folgenden Schritten:
- Bereitstellen (S1) von Betriebsgrößenverläufen einer Vielzahl von Energiespeichern in ihren jeweiligen Anwendungen;
- Auswerten (S2) der Betriebsgrößenverläufe jedes Energiespeichers mithilfe eines Energiespeichermodells, um als Energiespeicherdaten jeweils einen aktuellen Alterungszustand und einen oder mehrere interne Systemzustände zu erhalten;
- Bereitstellen (S3) von Energiespeicherinformationen für jeden der Energiespeicher, wobei die Energiespeicherinformationen zumindest einen Energiespeichertyp des jeweiligen Energiespeichers angeben;
- Bereitstellen (S4) mindestens einer Recycling-Anfrage für mindestens einen Recyclingprozess, wobei die Recycling-Anfrage zumindest eine Materialart und eine entsprechende Materialmenge angibt;
- Auswählen (S5, S6) von Energiespeichern abhängig von der mindestens einen Recycling-Anfrage und dem Energiespeichertyp und abhängig von einem Eignungswert, der eine Eignung des jeweiligen Energiespeichers für ein sofortiges Recycling angibt, so dass nur zu der mindestens einen Recycling-Anfrage passende Energiespeicher mit den schlechtesten Eignungen für die jeweiligen Anwendungen ausgewählt werden;
- Zuführen (S7) des ausgewählten Energiespeichers zu dem mindestens einen Recyclingprozess.

2. Verfahren nach Anspruch 1, wobei das Auswählen der Energiespeicher basierend auf dem Ergebnis einer Abfrage eines Systems, welches mindestens einen Wissensgraphen umfasst, mit der Recycling-Anfrage und dem jeweiligen Energiespeichertyp des betreffenden Energiespeichers erfolgt.

3. Verfahren nach Anspruch 2, wobei der Wissensgraph mindestens eine der folgenden Informationen enthält:
- Information zu einem Digitalen Produkt-Zwilling, insbesondere mindestens eines von Master-Daten und Typ-Daten, Qualitäts-Informationen, Service-Daten, Logistik-Daten, Anforderungs-Informationen u. Spezifikation für interne Prozesse und externe Prozesse, Design- Auslegungs- und Engineering-Informationen, generelle Wirkketten Modellierung, Validierungs-Daten, Freigabe-Daten, Meta-Informationen zum Kontext, und Informationen zum digitalen Produkt-Pass, und/oder
- Informationen zu einem digitalen Instanz-Zwilling, insbesondere Instanzen zu sämtlichen o.g. Produkt-Informationen, Fertigungs-Daten einem Digitalen Instanzwillings, Qualitäts-Instanz-Daten, Betriebs-Daten, Meta-Informationen zum Kontext.

4. Verfahren nach einem der Ansprüche 1 bis 3, wobei das Auswählen der Energiespeicher basierend auf einer Energiespeicherinformation über eine verbleibende Mindest-Einsatzzeit in der jeweiligen Anwendung erfolgt.

5. Verfahren nach einem der Ansprüche 1 bis 4, wobei der Eignungswert eines jeweiligen Energiespeichers abhängig von einer Eignungsfunktion bestimmt wird, wobei die Eignungsfunktion eine oder mehrere der folgenden berücksichtigt:
- eine Menge an freigesetztem CO₂, die durch das Zuführen des bestimmten Energiespeichers zu dem Recyclingprozess entsteht, insbesondere durch den Transport von dem Standort der Energiespeicher zu einem Recyclingort des Recycling-Prozesses,
- der aktuelle Alterungszustand;
- eine Restlebensdauer, die mit einer prädizierten Alterungszustandstrajektorie bestimmt wird,
- ein Über- oder Unterschreiten eines jeweils vorgegebenen Schwellenwerts durch einen oder mehrere interne Systemzustände.

6. Verfahren nach einem der Ansprüche 1 bis 5, wobei eine Ontologie im Wissensgraph, materialisierend und/oder virtuell eingesetzt wird.

7. Verfahren nach einem der Ansprüche 1 bis 6, wobei eine Anzahl von Energiespeichern abhängig von einer Mengenangabe in der mindestens einen Recycling-Anfrage abhängig von einem Eignungswert ausgewählt wird.

8. Verfahren nach einem der Ansprüche 1 bis 7, wobei der Eignungswert mithilfe einer semantischen Traceability-Verknüpfung bestimmt wird, insbesondere abhängig von einer Menge an freigesetztem CO₂.

9. Verfahren nach einem der Ansprüche 1 bis 8, wobei eine automatisierte Speicherung in einer Datenbank mit semantischer Verlinkung im Wissensgraph erfolgt, sodass auf Basis von Nutzmustern oder Instandhaltungen oder Material-Austausch eine aktuelle effektive Menge an freigesetztem CO₂ berechnet und bereitgestellt wird.

10. Vorrichtung zur Durchführung eines der Verfahren nach einem der Ansprüche 1 bis 9.

11. Computerprogrammprodukt umfassend Befehle, die bei der Ausführung des Programms durch mindestens eine Datenverarbeitungseinrichtung diese veranlassen, die Schritte des Verfahrens nach einem der Ansprüche 1 bis 9 auszuführen.

12. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 9 auszuführen.
